# NEUE EUROPÄISCHE PATENTSCHRIFT

(11) **EP 0 467 112 B2**
(45) Veröffentlichungstag und Bekanntmachung des Hinweises auf die Entscheidung über den Einspruch: **28.02.2001**
(45) Hinweis auf die Patenterteilung: 28.12.1994
(21) Anmeldenummer: 91110460.2
(22) Anmeldetag: 25.06.1991
(51) Int. Cl.: B60T 8/00, B60R 16/02

(54) **Elektronisches Bremssystem für Strassenfahrzeuge**
Electronic brake system for road vehicles
Système de freinage électronique pour véhicules

(30) Priorität: 17.07.1990 DE 4022671
(43) Veröffentlichungstag der Anmeldung: 22.01.1992
(73) Patentinhaber: WABCO GmbH & Co. OHG, 30453 Hannover (DE)
(72) Erfinder: Neuhaus, Detlev, W-3000 Hannover (DE); Stehr, Wolfgang, W-3000 Hannover (DE)
(74) Vertreter: Schrödter, Manfred, Dipl.-Ing.

(56) Entgegenhaltungen:
- EP-A- 0 039 603
- EP-A- 0 179 282
- EP-A- 0 189 076
- EP-A- 0 322 141
- US-A- 3 980 350
- US-A- 4 749 238
- Integrated Vehicle Control, Convergence 88, 1988, p.97-106
- Visit to ERF Limited, Grau Limited, 11th January 1990

## Beschreibung

Die Erfindung bezieht sich auf ein elektronisches Bremssystem für Straßenfahrzeuge gemäß dem Oberbegriff des Patentanspruchs 1.

Ein derartiges elektronisches Bremssystem ist bekannt aus der DE-A 26 22 746. Bei elektronischen Bremssystemen wird eine vom Fahrer mittels eines Gebers vorgegebene Bremsgröße als ein elektrischer Spannungswert dargestellt. Diese Spannung kann dann anschließend in einer Elektronik noch modifiziert werden. So kann z.B. eine gewünschte Kennlinie zwischen der Bremspedalstellung und der erzeugten Bremskraft nachgebildet werden. Auch ist es möglich, die Beladung des Fahrzeugs zu berücksichtigen (Automatisch lastabhängige Bremse ALB), oder einen Blockierschutz vorzusehen (Antiblockiersystem ABS). Die so modifizierte Spannung wird dann nach einer Verstärkung den einzelnen Rädern zugeordneten Magnetventilen zugeleitet, mit welchen das die einzelnen Bremsen betätigende Druckmittel (Hydraulik oder Druckluft) reguliert wird.

Der Hauptvorteil eines solchen elektronischen Bremssystems gegenüber einer konventionellen Bremsanlage, bei welcher die Steuergröße von einem pneumatischen Bremsventil zu den Bremszylindern geführt wird (bei einer Druckluftbremsanlage in Nutzfahrzeugen), liegt in der erhöhten Schnelligkeit und in der leichteren Modifizierbarkeit der elektrischen Steuergröße.

Bei der Anwendung eines elektronischen Bremssystems in Nutzfahrzeugen wird auf die Sicherheit des Systems und auf niedrige Kosten besonderer Wert gelegt. Ferner soll bei Defekten in der Elektronik der Fehler leicht zu lokalisieren und, möglichst durch bloßes Austauschen von Komponenten, zu beheben sein.

Bekannte Konzepte elektronischer Bremssysteme sind zentral aufgebaut, d.h. eine zentral angeordnete Steuereinheit ermittelt alle für die Bremsung notwendigen Informationen wie Stellung des Bremspedals, Bremsdruck, Bremsmoment, Drehzahlen der Räder usw. Aus diesen Informationen werden die Stellgrößen für die Bremsen gewonnen und die entsprechenden Aktuatoren angesteuert. Zusätzliche Aufgaben der zentralen Steuereinheit sind im wesentlichen die Überwachung der gesamten Bremsanlage, Anzeige des Betriebszustands und Einleitung von Maßnahmen bei Fehlern.

Aus der DE-A 33 35 932 ist weiter eine Fahrzeug-Elektronik bekannt, die in mehrere Funktionsmodule, z.B. für Klimasteuerung, Blockierschutz usw. aufgeteilt ist. Die Module enthalten Mikroprozessoren, die nach einem vorgegebenen Programm ihre Aufgaben erledigen, also eine eigene Intelligenz besitzen. Diese Module sind an zentraler Stelle im Fahrzeug angeordnet und im Störungsfall leicht einzeln austauschbar.

Über einen Multiplex-Sender/Empfänger sind die Module an mehrere sogenannte Unterverteilungen angeschlossen. Diese sind dezentral in den Ecken des Fahrzeugs angeordnet, dekodieren die Multiplex-Signale, und leiten die Befehle der Zentralmodule weiter an angeschlossene Bauteile, wie Lampen, Aktuatoren oder Ventile. Ebenso ist eine Rückmeldung an die Zentralmodule, z.B. von Signalen angeschlossener Sensoren, möglich.

Obwohl die Unterverteilungen ebenfalls einen Mikroprozessor enthalten, besitzen sie keine eigene Intelligenz, sondern leiten lediglich über das Multiplex-System Befehle bzw. Meßwerte weiter.

Die bekannten Systeme mit zentral im Fahrzeug angeordneter Intelligenz, d.h. mit Zentralelektronik mit Mikroprozessoren, haben nun gewisse Nachteile. So sind z.B. die elektrischen Leitungen von der Elektronik zu den Aktuatoren und von den Sensoren zur Elektronik relativ lang und daher störanfällig. Falls große Ströme fließen, bilden diese Leitungen eine Störquelle. Weiter ist die Zentralelektronik durch die große Zahl der Sensoren und Aktuatoren sehr komplex aufgebaut. Hierdurch und auch durch die große Zahl von Leitungen und Steckverbindungen wird die Störanfälligkeit erhöht. Außerdem sind Teilsysteme, z.B. Magnetventile, nicht ohne weiteres mit anderen Modellen austauschbar, da die Software der Zentralelektronik an die Daten der Ventile, insbesondere deren Schaltzeiten, angepaßt ist.

Aus der EP-A-0 179 282 ist weiter ein Verfahren bekannt, wobei mehrere unterschiedliche Mikroprozessoren (mit eigener Intelligenz), die jeweils eine Achse oder ein Rad kontrollieren, Daten als Codenummer an einen als Bezugssignalerzeuger dienenden Referenzprozessor übertragen. Die Mikroprozessoren sind in eine Ringleitung aufgenommen, wobei der Referenzprozessor aus den von den beteiligten Mikroprozessoren übermittelten Steigungsvorschlägen im laufenden Programmzyklus das neue Signal berechnet und dieses Signal über die Ringleitung nacheinander den übrigen Mikroprozessoren zuleitet.

Ferner ist aus der Sales Promotion boocklet "Visit to ERF Limited", Grau Limited 11.1.90 ein Bremssystem gemäß Oberbegriff des Patentanspruchs 1 bekannt.

Der Erfindung liegt die Aufgabe zugrunde, ein elektronisches Bremssystem der eingangs genannten Art anzugeben, welches die o.g. Nachteile vermeidet.

Diese Aufgabe wird durch die im Patentanspruch 1 enthaltene Erfindung gelöst. Die Unteransprüche enthalten zweckmäßige Weiterbildungen der Erfindung.

Durch die erfindungsgemäße dezentrale Ausbildung der Elektronik mit mindestens einem Zentralmodul, das Mikroprozessoren mit der oben erwähnten eigenen Intelligenz aufweist, und mit mehreren Radmodulen, welche ebenfalls Mikroprozessoren mit der erwähnten eigenen Intelligenz aufweisen, und wobei die Radmodule den Zentralmodulen hierarchisch unterstellt sind, ergeben sich verschiedene Vorteile des Systems.

Die Zentralmodule sind systemübergreifend in die übrige Fahrzeugelektronik eingebunden, d.h., sie empfangen Signale wie Lenkwinkel, Fahrzeugverzögerung, vom Fahrer vorgegebene Werte wie Bremsanforderung, Feststellbremse, Retarder, usw., die für das gesamte Fahrzeug von Wichtigkeit sind.

Dagegen sind die Radmodule nur für die Versorgung des jeweils zugehörigen Rades zuständig. Sie enthalten unter anderem die zugehörige Leistungsendstufe, mit welcher das Modulationsventil des zugehörigen Bremszylinders angesteuert wird. Sie enthalten weiter zugehörige intelligente Elektroniken, wie der dem Rad zugeordnete Blockierschutz-Regelkanal.

Übergeordnete Teile der Blockierschutz-Elektronik, wie z.B. die Sicherheits-Überwachung des Gesamtsystems und die Erzeugung einer gemeinsamen Fahrzeug-Referenzgeschwindigkeit, sind nicht in den Radmodulen, sondern in den Zentralmodulen angeordnet.

Die hauptsächlichen Vorteile des erfindungsgemäßen Systems gegenüber dem Stand der Technik sind der geringere Installationsaufwand, die kleinere Baugröße der Steuereinheiten und geringere Zahl von Leitungen, der einfache Aufbau der Steuereinheiten (Testbarkeit), die getrennten Versorgungs- und Informationsstränge, die selektive Abschaltbarkeit von Teilsystemen im Fehlerfall und die einfache Austauschbarkeit der Komponenten durch den modularen Aufbau, wobei auch Varianten einfach zu realisieren sind.

Die Erfindung wird im folgenden anhand einer Zeichnung näher erläutert.

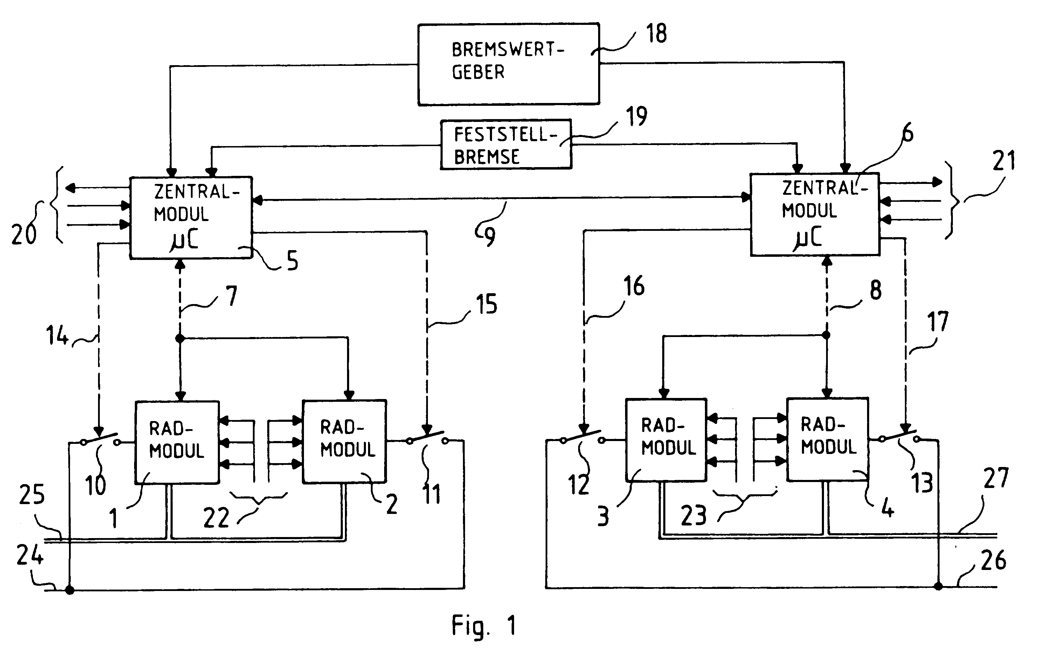

Diese zeigt in
- **Fig.1**: ein Blockschaltbild des gesamten elektronischen Bremssystems,
- **Fig.2**: den genauen Aufbau eines Radmoduls.

Das Bremssystem besteht aus zwei an zentraler Stelle im Fahrzeug angeordneten Zentralmodulen (5, 6) und vier in der Nähe der Räder angeordneten Radmodulen (1 bis 4). Die Zentralmodule (5, 6) können beispielsweise im Fahrerhaus, im Motorraum oder in einem seitlich am Fahrzeug befestigten Behälter angeordnet sein. Die Zentralmodule (5, 6) bestehen im wesentlichen aus mindestens einem Mikrocomputer. Als Mikrocomputer kann hier der Typ 68010 der Firma Motorola, oder ein anderer 16-BIT-Mikrocomputer eingesetzt werden.

Die wichtigste Eingangsgröße für die Zentralmodule (5, 6) des elektronischen Bremssystems ist die vom Fahrer vorgegebene Stellung (oder die Pedalkraft) des Bremspedals. Dieser Wert wird von einem elektronischen Bremswertgeber (18) abgefühlt und dem Zentralmodulen (5, 6) zugeleitet. Der Bremswertgeber (18) ist zweikreisig aufgebaut, und kann zum Abfühlen der Bremspedalstellung beispielsweise zwei Potentiometer enthalten. Die Meßwertübertragung zu den Zentralmodulen kann analog oder digital erfolgen.

In prinzipiell gleicher Weise werden den Zentralmodulen (5, 6) auch die Stellung einer Feststellbremse (19) zugeleitet. Auch dieses System ist zweikreisig ausgebildet.

Über Leitungen (20, 21) erhalten die Zentralmodule (5, 6) weitere Informationen von zusätzlichen Sensoren, und können auch Aktuatoren angesteuert werden (nicht im einzelnen dargestellt). Als weitere Sensoren kommen infrage ein Sensor für die Fahrzeugverzögerung sowie ein Sensor für den Lenkwinkel. Als weiterer Aktuator kann z.B. das Magnetventil eines Retarders angeschlossen sein.

Die beiden Zentralmodule (5, 6) sind über einen Datenbus (9) miteinander verbunden. Über diesen Datenbus (9) erfolgt ein Datenaustausch, beispielsweise über die Achslast, die Fahrzeugreferenzgeschwindigkeit und den vom Bremswertgeber (18) eingegebenen Bremswert. Außerdem erfolgt über die Leitung (9) eine gegenseitige Sicherheits-Kontrolle der beiden Mikrocomputer.

Die Verbindung zwischen den Zentralmodulen (5, 6) und den Radmodulen (1 bis 4) erfolgt über zwei Datenbusse (7, 8). Diese sind mit definierten Schnittstellen, vorzugsweise Standard-Schnittstellen versehen, so daß gegebenenfalls auch Zentralmodule und Radmodule verschiedener Hersteller miteinander kommunizieren können. Der Datenaustausch erfolgt vorzugsweise über eine Zweidrahtleitung im seriellen Betrieb. Durch die erfindungsgemäße Aufteilung in Zentral- und Radmodule ist eine derartige Verbindung ausreichend, da nur eine geringe Zahl übergeordneter Daten ausgetauscht wird, während größere Datenmengen, beispielsweise während einer Blockierschutz-Regelung direkt in den Radmodulen verarbeitet werden können.

Über weitere Verbindungsleitungen (14 bis 17) können die Zentralmodule (5, 6) elektronische Schalter oder Relais (10 bis 13) ansteuern. Mit diesen können die Radmodule (1 bis 4) im Fehlerfall von ihrer Stromversorgung (24, 26) abgetrennt werden. Die Schalter bzw. Relais (10 bis 13) können auch innerhalb der Radmodule (1 bis 4) angeordnet sein.

Es ist auch möglich, die Schalter (10 bis 13) in der Nähe oder in den Zentralmodulen (5, 6) anzuordnen. In diesem Fall erfolgt die Stromversorgung der Radmodule (1 bis 4) über die Leitungen (7, 8), welche hierzu mit entsprechend dickeren zusätzlichen Drähten zur Stromübertragung versehen sind.

Den Radmodulen (1 bis 4) können über Eingangsleitungen (22, 23) Signale von externen Sensoren zugeleitet werden. Diese Sensoren können z.B. die Bremsentemperatur, die Belagstärke, die Bremskraft und die Radgeschwindigkeit abfühlen. Es können auch zwei Radmodule einer Achse zu einem Achsmodul zusammengefaßt sein.

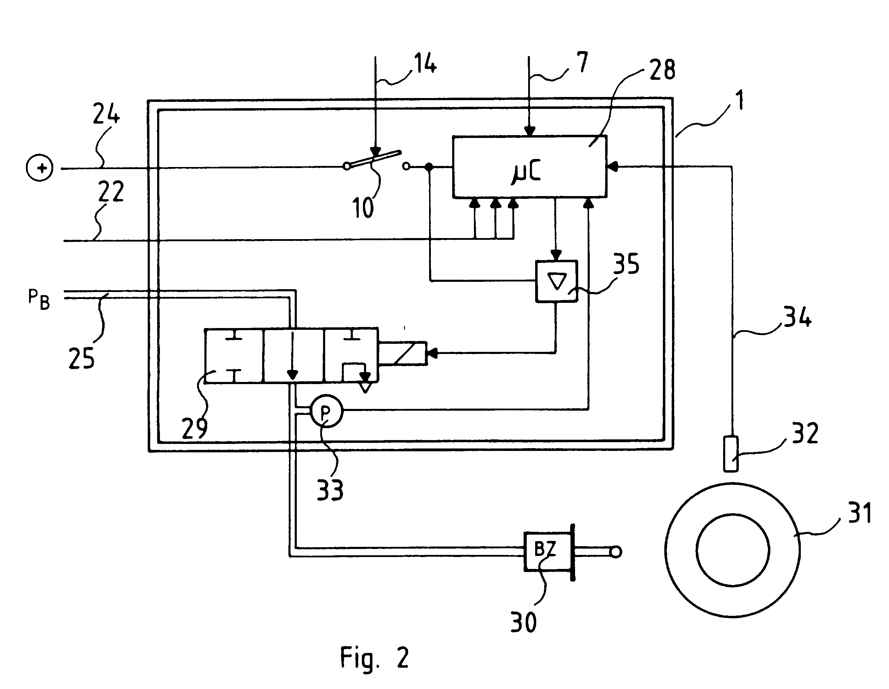

In der Fig.2 ist der innere Aufbau des Radmoduls (1) schematisch dargestellt. Ein Mikrocomputer (28), vorzugsweise vom gleichen Typ wie in den Zentralmodulen enthalten, wird über eine Leitung (24) und den elektronischen Schalter (10) mit Betriebsspannung versorgt. Der Schalter (10) ist über die Leitung (14) vom Zentralmodul (5) betätigbar. Der Datenaustausch zwischen dem Mikrocomputer (28) und dem Zentralmodul (5) erfolgt über den Datenbus (7). Externe Sensoren sind über die Leitung (22) an den Mikrocomputer (28) angeschlossen. Die Drehzahl des zugehörigen Rades (31) wird durch einen Sensor (32) über eine Leitung (34) dem Mikrocomputer (28) zugeleitet. Die Messung des Bremsdruckes im Bremszylinder (30) erfolgt über einen Drucksensor (33). Über eine Bremsleitung (25) wird das zum Bremsen verwendete Druckmittel (Druckluft oder Hydrauliköl) über einen Bremsdruckmodulator (29) dem Bremszylinder (30) zugeführt. Der Modulator (29) kann durch den Mikrocomputer (28) über einen Verstärker (35) in die Stellungen Druckhalten, Drucksteigem oder Drucksenken geschaltet werden. Es ist aber auch die Verwendung eines analogen Modulators (29) möglich.

Bei den mit Mikrocomputern versehenen Modulen (1 bis 6) sind der Einfachheit halber alle dem Fachmann bekannten notwendigen zusätzlichen Schaltungsteile, wie Pegelanpassungen, Analog-Digital-Wandler, Treiber usw. nicht näher dargestellt worden.

Die Radmodule (1 bis 4) können die von den angeschlossenen Sensoren übermittelten Daten auch an die Zentralmodule (5, 6) weiterleiten. Dies gilt insbesondere für die Radgeschwindigkeiten und die Bremsbelagstärken.

Die Datenbusse (7 bis 9) können auch als Lichtleiter ausgebildet werden. Dies hat den Vorteil der größeren Störsicherheit und einer größeren übertragbaren Datenmenge.

Das elektronische Bremssystem funktioniert im wesentlichen wie folgt.

Der vom Fahrer vorgegebene Bremswert wird den Zentralmodulen (5, 6) zugeleitet und hier zunächst modifiziert. Dies bedeutet, daß mittels der in den Mikrocomputern enthaltenen Programme der vorgegebene Bremswort für die einzelnen Radmodule (1 bis 4) unterschiedlich ausfallen kann. Durch diesen sogenannten Bremswertabgleich soll sichergestellt werden, daß beispielsweise die Belagstärken der Bremsen im laufe der Zeit nicht voneinander abweichen, daß eine überhitzte Bremse weniger stark beaufschlagt wird, und daß Giermomente ausgeglichen werden können usw.

Weiter ist in den Zentralmodulen (5, 6) eine ALB-Funktion (Automatisch lastabhängige Bremse) enthalten. Hierdurch wird die Bremsung lastabhängig gemacht, d.h. einem vorgegebenen Pedalweg im Bremswertgeber (18) entspricht bei beladenem Fahrzeug ein höherer Bremsdruck als bei leerem Fahrzeug.

Die so modifizierten Bremswerte werden den Radmodulen zugeleitet, und durch diese die entsprechenden Bremsdruck-Modulatoren (29) angesteuert. Der vorgegebene Bremsdruck oder auch eine vorgegebene Bremskraft wird eingeregelt.

Falls durch den Radsensor (32) ein beginnendes Blockieren der Räder erkannt wird, wird der Bremsdruck mittels der in den Radmodulen integrierten Blockierschutz-Funktion in dem Fachmann bekannter Weise herabgesetzt bzw. auf einen konstanten Schlupfwert von etwa 20 % eingeregelt. Die für die ABS-Regelung zur Berechnung von Rad-Schlupfwerten benötigte Fahrzeugreferenzgeschwindigkeit wird in den Zentralmodulen (5, 6) erzeugt und den Radmodulen über die Datenbusse (7, 8) zugeleitet.

Neben der Blockierschutz-Funktion kann in den Mikrocomputern der Radmodule auch eine Schleuderschutzfunktion integriert sein, wodurch ein Durchdrehen der Räder beim Anfahren in an sich bekannter Weise verhindert wird.

Falls durch integrierte Sicherheitsschaltungen in den Radmodulen (1 bis 4) oder den Zentralmodulen (5, 6) ein Fehler in den Radmodulen (1 bis 4) festgestellt wird, kann das betreffende Modul durch den zugehörigen Schalter (10 bis 13) abgeschaltet werden. In diesem Falle kann das zugehörige Rad nicht mehr gebremst werden. Durch die übrigen, noch intakten Räder ist jedoch die vorgeschriebene Restbremswirkung sichergestellt. Eine entsprechende Abschaltung erfolgt auch bei einem Defekt in den Datenbussen (7, 8).

Die Radmodule (1, 2) bzw. (3, 4) können entweder zur gleichen Achse oder zu einer Diagonalen des Fahrzeugs gehören. Die Aufteilung in Diagonalen hat den Vorteil einer besonders guten Seitenführungskraft im Fehlerfall.

## Patentansprüche

1. Elektronisches Bremssystem für Straßenfahrzeuge, mit einer zur Ansteuerung von Bremsdruckmodulatoren dienenden Elektronik, mit folgenden Merkmalen :
a) die Elektronik ist aufgeteilt in mehrere den Rädern zugeordnete, mit mindestens einem Mikrocomputer versehene Radmodule (1, 2, 3, 4) mit eigener Intelligenz, die räumlich in der Nähe der Räder angeordnet sind, und in mindestens ein mit mindestens einem Mikrocomputer versehenes übergeordnetes Zentralmodul (5, 6) mit eigener Intelligenz, welches vorzugsweise an zentraler Stelle des Fahrzeugs angeordnet ist;
b) das Zentralmodul (5, 6) empfängt mindestens die Werte eines Betriebs-Bremswertgebers (18) und einer Feststellbremse (19);
c) die Radmodule (1, 2, 3, 4) empfangen von dem Zentralmodul (5, 6) einen Bremsdruck-Sollwert;
d) die Radmodule (1, 2, 3, 4) empfangen von Sensoren (32, 33), die am zugehörigen Rad (31) bzw. Bremszylinder (30) und/oder Bremsdruckmodulator (29) angeordnet sind, mindestens einen Meßwert für die Radgeschwindigkeit und den Bremsdruck;
e) die Radmodule (1, 2, 3, 4) senden wenigstens einen der von ihnen empfangenen Meßwerte bzw. eine daraus abgeleitete Information an das Zentralmodul (5, 6);
f) die Radmodule (1, 2, 3, 4) erzeugen elektrische Ausgangssignale zur Ansteuerung eines zugehörigen, vorzugsweise baulich mit den Radmodulen (1, 2, 3, 4) vereinigten Bremsdruckmodulators (29);
g) der Informationsaustausch zwischen dem Zentralmodul (5, 6) und den Radmodulen (1, 2, 3, 4) erfolgt über mindestens einen Datenbus (7, 8) mit festgelegten Schnittstellen.
gekennzeichnet durch folgende Merkmale:
h) in den Radmodulen (1, 2, 3, 4) ist eine Blockierschutz- und/oder Schleuderschutzfunktion (ABS/ASR) enthalten;
i) in dem Zentralmodul (5, 6) wird eine Fahrzeug-Referenzgeschwindigkeit für den Blockierschutz gebildet.

2. Bremssystem nach Anspruch 1, dadurch gekennzeichnet, daß in den Zentralmodulen (5, 6) nach Last-Kriterien (ALB) und/oder nach Bremsbelagverschleiß-Kriterien eine Bremsdruck-Modifizierung bzw. -Aufteilung durchgeführt wird.

3. Bremssystem nach Anspruch 1 bis 2, dadurch gekennzeichnet, daß zwei Zentralmodule (5, 6) vorgesehen sind, welche über einen weiteren Datenbus (9) mit Standardschnittstelle Informationen austauschen und sich gegenseitig überwachen.

4. Bremssystem nach Anspruch 1 bis 3, dadurch gekennzeichnet, daß die Stromversorgung der Radmodule (1, 2, 3, 4) im Störungsfall mittels elektronischer Schalter oder Relais (10, 11, 12, 13) durch das Zentralmodul (5, 6) abschaltbar ist.

5. Bremssystem nach Anspruch 1 bis 4, dadurch gekennzeichnet, daß die Datenbusse (7, 8, 9) als Lichtleiter ausgebildet sind.

6. Bremssystem nach Anspruch 1 bis 5, dadurch qekennzeichnet, daß die Radmodule (1, 2, 3, 4) über zusätzliche Eingangsleitungen (22, 23) Informationen über Bremsbelagstärken und -Temperaturen erhalten.

7. Bremssystem nach Anspruch 1 bis 6, dadurch gekennzeichnet, daß zwei Radmodule (1, 2) oder (3, 4) zu einem Achsmodul zusammengefaßt sind.

## Claims

1. An electronic brake system for road vehicles, having electronics serving for the control of brake pressure modulators, having the following features:
a) the electronics is divided into several intelligent wheel modules (1, 2, 3, 4) associated with the wheels and provided with at least one microcomputer and arranged spatially in the vicinity of the wheels, and into at least one intelligent higher-level central module (5, 6) provided with at least one microcomputer and preferably arranged at a central location of the vehicle;
b) the central module (5, 6) receives at least the values of a service brake value generator (18) and a parking brake (19);
c) the wheel modules (1, 2, 3, 4) receive a desired brake pressure value from the central module (5, 6);
d) from sensors (32, 33) that are arranged at the associated wheel (31) or brake cylinder (30) and/or brake pressure modulator (29), the wheel modules (1, 2, 3, 4) receive at least one measurement value for the wheel speed and the brake pressure;
e) the wheel modules (1, 2, 3, 4) transmit at least one of the measurement values they receive, or information derived therefrom, to the central module (5, 6);
f) the wheel modules (1, 2, 3, 4) generate electrical output signals for control of an associated brake pressure modulator (29) that is preferably structurally combined with the wheel modules (1, 2, 3, 4);
g) exchange of information between the central module (5, 6) and the wheel modules (1, 2, 3, 4) is effected by way of at least one data bus (7, 8) with fixed interfaces.
characterized by the following features:
h) an anti-lock and/or anti-slip function (ABS/ASR) is contained in the wheel modules (1, 2, 3, 4);
i) a vehicle reference speed for the anti-lock facility is formed in the central module (5, 6).

2. A brake system according to claim 1, characterized in that a modification or distribution of brake pressure is carried out in the central modules (5, 6) according to load criteria (ALB) and/or according to brake lining wear criteria.

3. A brake system according to claims 1 and 2, characterized in that two central modules (5, 6) are provided which exchange information by way of a further data bus (9) with a standard interface, and which monitor each other.

4. A brake system according to claims 1 to 3, characterized in that, in the event of interference, the current supply to the wheel modules (1, 2, 3, 4) is arranged to be disconnected by the central module (5, 6) by means of electronic switches or relays (10, 11, 12, 13).

5. A brake system according to claims 1 to 4, characterized in that the data buses (7, 8, 9) are in the form of optical waveguides.

6. A brake system according to claims 1 to 5, characterized in that the wheel modules (1, 2, 3, 4) receive information about brake lining thicknesses and temperatures by way of additional input lines (22, 23).

7. A brake system according to claims 1 to 6, characterized in that two wheel modules (1, 2) or (3, 4) are combined to form one axle module.

## Revendications

1. Système de freinage électronique pour véhicules routiers, comprenant une électronique pour commander des modulateurs de pression de freinage, présentant les caractéristiques suivantes :
a) l'électronique est partagée en plusieurs modules de roue (1, 2, 3, 4) coordonnés aux roues, pourvues d'au moins un micro-ordinateur et ayant une intelligence propre, qui sont placés à proximité des roues, et en au moins un module central (5, 6) hiérarchiquement supérieur, pourvu d'au moins un micro-ordinateur et ayant une intelligence propre, qui est placé de préférence à un endroit central du véhicule ;
b) le module central (5, 6) reçoit au moins les valeurs d'un transmetteur de valeur de freinage (18) du frein de service et d'un frein de stationnement (19);
c) les modules de roue (1, 2, 3, 4) reçoivent du module central (5, 6) une valeur de consigne pour la pression de freinage;
d) les modules de roue (1, 2, 3, 4) reçoivent, à partir de capteurs (32, 33) disposés sur la roue (32) ou le cylindre de frein (30) coordonné et/ou sur un modulateur de pression de freinage (29) coordonné, au moins une valeur mesurée de la vitesse de roue et de la pression de freinage;
e) les modules de roue (1, 2, 3, 4) envoient au module central (5, 6) au moins l'une des valeurs mesurées reçues par eux ou une information qui en est dérivée;
f) les modules de roue ( 1, 2, 3, 4) génèrent des signaux électriques de sortie pour commander un modulateur de pression de freinage (29) coordonné, de préférence réuni par la construction aux modules de roue (1, 2, 3, 4); et
g) l'échange d'information entre le module central (5, 6) et les modules de roue (1, 2, 3, 4) s'effectue à travers au moins un bus de données (7, 8) comportant des interfaces déterminées,
caractérisé par les caractéristiques suivantes :
h) les modules de roue (1, 2, 3, 4) contiennent une fonction antiblocage et/ou une fonction antipatinage (ABS/ASR) ;
i) une vitesse de référence du véhicule est établie dans le module central (5, 6) pour l'antiblocage.

2. Système de freinage selon la revendication 1, caractérisé en ce qu'une modification ou une répartition de la pression de freinage s'effectue dans les modules centraux (5, 6) selon des critères de charge (ALB) et/ou selon des critères d'usure des garnitures de frein.

3. Système de freinage selon les revendications 1 et 2, caractérisé en ce que deux modules centraux (5, 6) sont prévus, qui échangent des informations et se surveillent mutuellement à travers un bus de données (9) supplémentaire contenant une interface standardisée.

4. Système de freinage selon les revendications 1 à 3, caractérisé en ce que l'alimentation électrique des modules de roue (1, 2, 3, 4) peut être coupée, dans le cas d'une perturbation, par le module central (5, 6) au moyen d'interrupteurs électroniques ou de relais (10, 11, 12, 13).

5. Système de freinage selon les revendications 1 à 4, caractérisé en ce que les bus de données (7, 8, 9) sont réalisés sous forme de fibres optiques.

6. Système de freinage selon les revendications 1 à 5, caractérisé en ce que les modules de roue (1, 2, 3, 4) reçoivent des informations relatives aux épaisseurs des garnitures de frein et aux températures à travers des lignes d'entrée supplémentaires (22, 23).

7. Système de freinage selon les revendications 1 à 6, caractérisé en ce que deux modules de roue (1, 2 ou 3, 4) sont rassemblés en un module d'essieu.
